**Europäisches Patentamt**

**European Patent Office**

**Office européen des brevets**

(19)

(11) Veröffentlichungsnummer: **0 242 571 B1**

## (12) EUROPÄISCHE PATENTSCHRIFT

(45) Veröffentlichungstag der Patentschrift: **19.08.92**

(21) Anmeldenummer: **87103565.5**

(22) Anmeldetag: **12.03.87**

(51) Int. Cl.5: **H04M 3/22**, H04M 3/00, H04M 7/14

(54) Schaltungsanordnung für den Anschluss von Anschlussleitungen eines digitalen Zeitmultiplex-Fernsprechnetzes.

(30) Priorität: **23.04.86 DE 3613715**

(43) Veröffentlichungstag der Anmeldung:
**28.10.87 Patentblatt 87/44**

(45) Bekanntmachung des Hinweises auf die Patenterteilung:
**19.08.92 Patentblatt 92/34**

(84) Benannte Vertragsstaaten:
**AT BE CH DE FR GB IT LI LU NL SE**

(56) Entgegenhaltungen:
**EP-A- 0 073 462**
**DE-A- 2 938 970**
**FR-A- 2 542 548**
**US-A- 4 535 201**

(73) Patentinhaber: **SIEMENS AKTIENGESELL-SCHAFT**
**Wittelsbacherplatz 2**
**W-8000 München 2(DE)**

(72) Erfinder: **Vaclavik, Peter, Dipl.-Ing.**
**Rabelstrasse 20**
**W-8000 München 80(DE)**

## Beschreibung

Die Erfindung betrifft eine Schaltungsanordnung für den Anschluß von Anschlußleitungen eines digitalen Zeitmultiplex-Fernmeldenetzes gemäß dem Oberbegriff des Patentanspruchs 1.

Aus der europäischen Pantanmeldung EP-A-0 073 462 ist es bekannt, ein und dieselbe Indikationsschaltung für die Überwachung des Anreizzustandes, der Teilnehmerschleifenunterbrechungen aufgrund der Wahl und des Auslösens, sowie für die Überwachung des Schleifenschlusses als Folge eines Rufs einzusetzen, wozu diese Indikationsschaltung über zwei Spannungsteiler an die Adern der Teilnehmeranschlußleitung angeschlossen ist und wozu eine Mehrzahl von Speisewiderständen für die Zufuhr des Speisestroms an die Teilnehmeranschlußleitung wahlweise entweder als solche wirksam geschaltet werden können oder aber zum Teil lediglich als Bestandteile der Spannungsteiler dienen. Außer einer solchen Möglichkeit innerhalb desselben Einsatzfalles, nämlich der Leitungsindikation, eine Indikationsschaltung mehrfach auszunutzen oder alternativ zu dieser Möglichkeit besteht auch ein Interesse daran, für unterschiedliche Einsatzfälle, die unter Umständen auch unterschiedliche Arten von Indikationen erfordern, eine universell einsetzbare Teilnehmeranschlußschaltung zu konzipieren.

So sollte es bei einer solchen Anschlußschaltung neben der eigentlichen Leitungsindikation möglich sein, auch eine Erdpotentialindikation im Rahmen einer Signalisierung zwischen einer Ortsvermittlungsstelle und einer Nebenstellenanlage durch Anlegen von Erdpotential an einer Ader der Amtsleitung bei einer bestimmten Schaltungskonstellation im Amt oder in der Nebenstellenanlage vorzunehmen.

Eine solche Anschlußschaltung sollte ferner auch für einen Zweieranschluß geeignet sein, indem sie die Indikation des jeweils betreffenden einen Anreiz gebenden Teilnehmers ermöglicht.

Unabhängig von der Verschiedenartigkeit der einsatzabhängigen Indikationen besteht eine übergeordnete Forderung an die Leitungsindikation in der Forderung nach Unempfindlichkeit der Indiaktionsschaltung gegenüber eingestreuten Störwechselspannungen, insbesondere Netzwechselspannungen.

Die Überlegungen für ein Konzept solcher universal einsetzbarer Anschlußschaltungen gingen bisher dahin, für eine Schleifenschlußindikation einerseits und für die Erdpotentialindikation bzw. die Indikation des einen Anreiz gebenden Teilnehmers eines Zweieranschlusses andererseits getrennte Indikationschaltungen vorzusehen.

Die Aufgabe der vorliegenden Erfindung besteht nun darin, eine universell einsetzbare Anschlußschaltung anzugeben, die den vorgenannten Forderungen bei kleinerem Aufwand und geringeren Kosten gerecht wird.

Erfindungsgemäß wird diese Aufgabe bei einer solchen Anschlußschaltung durch einen über Spannungsteiler an die Adern der Anschlußleitung angekoppelte Indikationsschaltung, die sowohl für eine Schleifenschlußindikation bei der Anschlußleitung als auch für eine Erdpotentialindikation an einer der Adern der Anschlußleitung im Zuge einer entsprechenden Signalisierung, als auch der Indikation des einen Anreiz gebenden Teilnehmers im Falle des Vorliegens einer gemeinsamen Teilnehmeranschlußleitung eines Zweieranschlusses dienen kann, wozu die im Speisestromkreis für die Anschlußleitung liegenden Widerstände und die Spannungsteilerwiderstände derart bemessen sind, da auf die Leitungsadern eingekoppelte Störwechselspannungen, sich an den Eingängen der Indikationsschaltung kompensieren, wozu ferner erste Schaltmittel vorgesehen sind, durch die bei der genannten Erdpotentialindikation und Teilnehmerindikation ein Widerstand in diejenige Leitungsader einfügbar ist, an der die Erdpotentialmessung erfolgt, der so bemessen ist, daß er die für diese Indikationsarten erhöte Empfindlichkeit der Indikationsschaltung bewirkt, und durch die außerdem wenigstens eine an dieser Leitungsader liegende Filterschaltung wirksam geschaltet wird, die Auswirkungen der genannten Störwechselspannungen auf die Indikationsschaltung verhindert, und durch die die andere Ader der Anschlußleitung von der Indikationsschaltung abgetrennt und an Erdpotential gelegt wird, und wozu schließlich zweite Schaltmittel vorgesehen sind, durch die im Falle der genannten Teilnehmerindikation die beiden Adern der Anschlußleitung in der Anschlußschaltung niederohmig überbrückt werden.

Die erfindungsgemäße Schaltungsanordnung ist in der Lage, sämtliche der obengenannten Indikationen durchzuführen, ohne daß hierzu mehrere Indikationsschaltungen erforderlich sind. Trotz der unterschiedlichen Schaltungszustände bei der Schleifenindikation und bei der Erdpotentialindikation und der Teilnehmerindikation eines Anreiz gebenden Teilnehmers eines Zweieranschlusses ist die Forderung nach Störunempfindlichkeit erfüllt, in einem Fall durch die erfindungsgemäß vorgesehene gleichwertige Dimensinierung der Leitungszweige, an die die Indikationsschaltung angeschlossen ist, im Falle der anderen Indikationsarten, bei denen ein Schaltungszustand vorliegt, bei dem diese Gleichartigkeit nicht mehr gegeben ist, durch die wirksam geschalteten Filterschaltungen. Wegen der Zu- bzw. Abschaltbarkeit der Filter kann andererseits sichergestellt werden, daß diese im Betriebszustand "Wahl" die Wahlimpulse nicht verzerren.

Eine weitere Ausgestaltung der Erfindung geht dahin, im Falle eines festgestellten unzulässig erhöhten Stroms auf der Anschlußleitung strombegrenzende Widerstände in die Ader der Anschlußleitung einzufügen. Wenn diese Maßnahme an Stelle einer Abschaltung der Anschlußschaltung von der Anschlußleitung ergriffen wird, kann, wie noch erläutert werden wird, die Indikationsschaltung zusätzlich dazu ausgenutzt werden, das Anliegen von Netzspannung an der Anschlußleitung aufgrund einer Störung anzuzeigen.

Nachstehend wird die Erfindung anhand eines Ausführungsbeispiels unter Bezugnahme auf eine Figur näher erläutert.

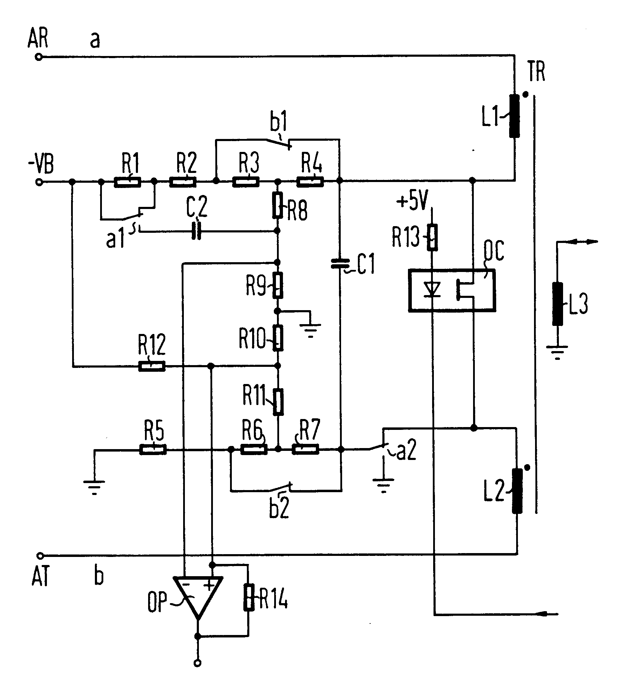

Die Figur zeigt im zum Verständnis der Erfindung erforderlichen Umfang eine Anschlußschaltung für den Anschluß einer zweiadrigen Anschlußleitung, deren Adern an die Anschlüsse AR und AT gelegt zu denken sind. Bei diesen Anschlußleitungen kann es sich je nach Einsatzfall um eine Teilnehmeranschlußleitung zum Anschluß einer Teilnehmerstation bzw. zweier Teilnehmerstationen eines Zweieranschlusses handeln, oder aber um eine Anschlußleitung, über die eine Nebenstellenvermittlungsanlage mit einer Vermittlungsstelle des öffentlichen Netzes in Verbindung steht. Die dargestellte Schaltungsanordnung ist demnach entweder Bestandteil einer öffentlichen Vermittlungsstelle oder einer Nebenstellenanlage.

Die Anschlüsse AR und AT stehen über Wicklungen L1 und bzw. L2 eines Sprachübertragers Ü über dessen weitere Wicklung L3 Sprachsignale an nicht dargestellte Teile der Vermittlungsstelle, u.a. deren Koppelfeld gelangen, sowie über eine Reihe von Widerständen mit den Polen einer Speisestromquelle in Verbindung, von denen der eine auf Erdpotential und der andere auf dem Potential -VB der Betriebsspannungsquelle liegen soll. Von den Widerständen R1 bis R4, die zwischen dem Anschluß AR und dem das Potential -VB der Speisestromquelle führenden Anschluß eingefügt sind, sind die Widerstände R3 und R4 durch einen Kontakt b1 eines Relais B niederohmig überbrückbar. Der Widerstand R4 ist relativ hochohmig. Der Widerstand R1 ist durch einen Kontakt a1, bei dem es sich um einen Umschaltekontakt handelt, eines Relais A niederohmig überbrückbar.

Von den Widerständen R5 bis R7, die zwischen dem Anschluß AT und dem auf Erdpotential liegenden Pol der Speisespannungsquelle liegen, sind der relativ hochohmige Widerstand R6 und der Widerstand R7 durch den Kontakt b2 des Relais B niederohmig überbrückbar. Dieser Teil der Speiseschaltung ist außerdem durch den Kontakt a2, des erwähnten Relais A, der ebenfalls ein Umschaltekontakt ist, von dem zum Anschluß AT führenden Teil der Schaltungsanordnung abtrennbar und statt dessen an einen Erdpotential führenden Schaltungspunkt anschaltbar.

Zwischen den Widerständen R3 und R4 bzw. den Widerständen R6 und R7 und einem Erdpotential führenden Schaltungspunkt ist jeweils ein Spannungsteiler aus den Widerständen R8 und R9 bzw. den Widerständen R10 und R11 angeschaltet. Der Teilerpunkt des Spannungsteilers R8/R9 steht mit dem invertierenden Eingang und der Teilerpunkt des Spannungsteilers R10/R11 mit dem nicht invertierenden Eingang eines Operationsverstärkers OP in Verbindung, der die erwähnte Indikationsschaltung darstellt. Der Teilerpunkt des Spannungsteilers R10/11 ist außerdem über einen Widerstand R12 mit dem das Potential -VB führenden Anschluß der Speisestromquelle verbunden.

Mit dem erwähnten Umschaltekontakt a1 des Relais A kann ein Kondensator C2 zwischen dem Teilerpunkt des Spannungsteiler R8/R9 und dem letztgenannten Anschluß der Speise spannungsquelle eingeschaltet werden.

Ein weiterer Kondensator C1 ist zwischen dem Verbindungspunkt des Widerstandes R4 und der Übertragerwicklung L1 bzw. dem Verbindungspunkt des Widerstandes R7 und der Übertragerwicklung L2 eingeschaltet. Parallel dazu liegt ein elektronischer Schalter OC, dessen unterer Anschlußpunkt auf der dem Widerstand R7 abgewendeten Seite des Umschaltekontaktes a2 liegt. Es handelt sich hierbei vorzugsweise um einen optoelektronischen Schalter.

Nachstehend wird auf die Funktion der erfindungsgemäßen Schaltung näher eingegangen.

In einem Betriebszustand, aus dem heraus eine Schleifenschlußindikation vorgenommen werden können soll, befinden sich die Umschaltkontakte a1 und a2 des Relais A in der dargestellten Schaltstellung, was bedeutet, daß der Widerstand R1 niederohmig überbrückt ist, und daß der Anschluß AT der Schaltungsanordnung, an dem die eine Ader der Anschlußleitung angeschlossen ist, andererseits über den Widerstand R5 an Erdpotential liegt. Die Widerstände R2, R8 und R9, sowie die Widerstände R5, R11, R10 und R12 sind so bemessen, daß jeweils zwischen dem Anschlußpunkt AT sowie dem Anschlußpunkt AR und einem Erdpotential führenden Schaltungspunkt gleich große Gesamtwiderstände liegen. Auf die Adern der Anschlußschaltung eingekoppelte Wechselstromstörungen gelangen daher an die Eingänge der Indikationsschaltung OP mit gleicher Amplitude und können daher auf das Ausgangssignal der Indikationsschaltung keinen Einfluß nehmen.

Im Falle eines Schleifenschlusses der Anschlußleitung, der eine relativ niederohmige Verbindung der Anschlußpunkte AR und AT mit sich bringt, kommt es zu einer Polaritätsumkehr der Spannung zwischen den Teilerpunkten der Spannungsteiler R8/R9 und R10/R11 mit der Folge eines Potentialwechsels am Ausgang des Operationsverstärkers OP, der als Schleifenschlußsignal gewertet wird.

Wenn sich die Kontakte a1 und a2 des A-Relais in der jeweils nicht dargestellten Schaltstellung befinden, also einerseits der Widerstand R1 in den Speisestromkreis eingefügt ist, andererseits die am Anschluß AT liegende Ader der Anschlußleitung von der übrigen Schaltungsanordnung abgetrennt und direkt an Erdpotential gelegt ist, befindet sich die dargestellte Schaltungsanordnung in einem Schaltzustand, in dem sie im Zuge einer zwischen einer Nebenstellenvermittlungsstelle einer Ortsvermittlungsstelle des öffentlichen Netzes anwendbaren Signalisierung, bei der Erdpotential an eine der Leitungsadern gelegt wird, zu Indikation dieses Erdpotentials herangezogen werden kann. Die Erhöhung des Widerstandes, der zwischen dem Anschluß AR und dem das Potential -VB aufweisenden Anschluß der Speisespannungsquelle liegt, um den Widerstand R1 entspricht einerseits der für diesen Signalisierungszustand geforderten Erhöhung des Widerstandes in der einen Ader der Anschlußleitung, andererseits der Erhöhung der Empfindlichkeit der Indikationsschaltung, wie sie für diese Indikationsart nötig ist.

Durch die andere Schaltstellung des Kontaktes a1 bedingt liegt nun der Kondensator C2 zwischen dem Teilerpunkt des Spannungsteilers R8/R9 und ber die Speisestromquelle an Erdpotential und bildet damit zusammen mit dem Widerstand R8 ein Tiefpaßfilter, das verhindert, daß Wechselstromeinstreuungen auf die Anschlußleitung die Indikationsschaltung beeinflussen. Dieselbe Wirkung hat die Wicklung L1 zusammen mit dem Kondensator C1, dessen eine Belegung nunmehr an Erdpotential liegt.

Wenn die erfindungsgemäße Schaltungsanordnung zum Anschluß einer Teilnehmeranschlußleitung eines Zweieranschlusses dienen soll, befinden sich die Kontakte a1 und a2 ebenfalls in der nicht dargestellten Schaltstellung. Darüber hinaus werden nunmehr durch den elektronischen Schalter OC die an den Anschlußpunkten AR und AT liegenden Adern der Anschlußleitung niederohmig überbrückt. Wenn an der am Anschluß AR liegenden Ader durch die Indikationsschaltung Erdpotential festgestellt wird, ist dies ein Anzeichen dafür, daß ein festgestellter Anreiz von der einen bestimmten Teilnehmerstation des Zweieranschlusses ausgeht, wogegen das Fehlen von Erdpotential an dieser Leitungsader ein Anzeichen dafür ist, daß der Anreiz von der anderen bestimmten Teilnehmerstation ausgeht. Die Dimensionierung des Widerstandes R1 ist derart, da auch für diese Indikationsart die entsprechende Ansprechempfindlichkeit des Operationsverstärkers OP vorliegt.

Wenn auf der Anschlußleitung durch eine gesonderte, hier nicht dargestellte Einrichtung ein fehlerbedingter Überstrom festgestellt worden ist, führt dies bei der erfindungsgemäßen Schaltungsanordnung zur Aktivierung des Relais B und damit zum Öffnen der Kontakte b1 und b2, so daß nunmehr die Widerstände R3 und R4 bzw. R6 und R7 in den Speisestromkreis eingefügt sind und wegen des relativ hohen Widerstandswertes der Widerstände R4 und R7 eine Begrenzung des Schleifenstroms erreicht ist.

Wenn der den Überstrom bedingende Fehler darin liegt, daß zwischen den Adern der Anschlußleitung die Netzwechselspannung liegt, dann kann bei der erfindungsgemäßen Schaltungsanordnung die Indikationsschaltung OP als Indikator für die Art der Störung herangezogen werden, da dann nämlich das von ihr abgegebene Ausgangssignal mit der Frequenz der Netzwechselspannung trotz der erläuterten Filterwirkung der Schaltelemente R8/C2 bzw. L1 der Frequenz der Netzwechselspannung pulsiert.

Im Betriebszustand "Wahl" hat das Relais A nicht angezogen und ist der Schalter OC geöffnet, so daß bei geschlossener Schleife der Anschlußleitung eine Verzerrung der Wahlimpulse nicht zu befürchten ist.

**Patentansprüche**

1. Schaltungsanordnung für den Anschluß von Anschlußleitungen eines digitalen Zeitmultiplex-Fernsprechnetzes mit einer über Spannungsteiler (R8/R9; R10/R11) an die Adern (a, b) der Anschlußleitung angekoppelten Indikationsschaltung (OP) für eine Schleifenschlußindikation bei der Anschlußleitung, **dadurch gekennzeichnet,** daß die Indikationsschaltung (OP) auch für eine Erdpotentialindikation an einer der Adern der Anschlußleitung im Zuge einer entsprechenden Signalisierung, und für die Indikation des einen Anreiz gebenden Teilnehmers im Falle des Vorliegens einer gemeinsamen Teilnehmeranschlußleitung eines Zweieranschlussees einsetzbar ist, wozu die im Speisestromkreis für die Anschlußleitung liegenden Widerstände (R1 bis R4; R5 bis R7) und die Spannungsteilerwiderstände (R8/R9; R10/R11; R12) derart bemessen sind, daß auf die Leitungsadern (a, b) eingekoppelte Störwechselspannungen, sich an den Eingängen der Indikationsschaltung kompensieren, wozu ferner erste Schaltmittel (A; a1, a2) vorgesehen sind, durch die bei der genannten Erdpotentialindikation und der Teilnehmerindikation ein Widerstand (R1) in diejenige Leitungsader (a) einfügbar ist, an der die Erdpotentialmessung erfolgt, der so bemessen ist, daß er die für diese Indikationsarten erhöhte Empfindlichkeit der Indikationsschaltung (OP) bewirkt und durch die außerdem wenigstens eine an dieser Leitungsader liegende Filterschaltung (R8/C2; L1/C1) wirksam wird, die Auswirkungen der genannten Störwechselspannungen auf die Indikationsschaltung verhindert, und durch die die andere Ader (b) der Anschlußleitung von der Indikationsschaltung abgetrennt und an Erdpotential gelegt wird, und wozu schließlich zweite Schaltmittel (OC) vorgesehen sind, durch die im Falle der genannten Teilnehmerindikation die beiden Adern (a,b) der Anschlußleitung in der Anschlußschaltung niederohmig überbrückt werden.

2. Schaltungsanordnung nach Anspruch 1, **gekennzeichnet durch** dritte Schaltmittel (B; b1, b2), durch die im Falle eines festgestellten unzulässig erhöhten Stroms auf der Anschlußleitung strombegrenzende Widerstände (R3, R4; R6, R7) in die Adern der Anschlußleitung eingefügt werden.

## Claims

1. Circuit arrangement for connecting subscriber lines of a digital time-division multiplex telephone network to an indication circuit (OP), coupled to the wires (a, b) of the subscriber line via voltage dividers (R8/R9; R10/R11), for a loop closure indication at the subscriber line, characterised in that the indication circuit (OP) can also be used for an earth potential indication on one of the wires of the subscriber line in the course of corresponding signalling, and for indicating the subscriber providing a stimulus in the case of the presence of a common subscriber line of a two-party connection, for which purpose the resistors (R1 to R4; R5 to R7) located in the power-feeding circuit for the subscriber line and the voltage divider resistors (R8/R9; R10/R11; R12) are dimensioned in such a manner that alternating interference voltages coupled into the line wires (a, b) compensate one another at the inputs of the indication circuit, for which purpose, furthermore, first switching means (A; a1, a2) are provided by means of which, with the said earth-potential indication and the subscriber indication, a resistor (R1) can be inserted into that line wire (a) at which the earth potential measurement occurs, which is dimensioned in such a manner that it causes increased sensitivity of the indication circuit (OP) for these types of indication and by means of which, in addition, at least one filter circuit (R8/C2; L1/C1) located at this line wire becomes effective, which prevents effects of the said alternating interference voltages on the indication circuit and by means of which the other wire (b) of the subscriber line is disconnected from the indication circuit and connected to earth potential, and for which purpose, finally, second switching means (OC) are provided by means of which, in the case of the said subscriber indication, the two wires (a, b) of the subscriber line are bridged with a low impedance in the termination circuit.

2. Circuit arrangement according to Claim 1, characterised by third switching means (B; b1, b2), by means of which, in case an excessively increased current is found on the subscriber line, current-limiting resistors (R3, R4; R6, R7) are inserted into the wires of the subscriber line.

## Revendications

1. Montage pour le branchement de lignes de raccordement d'un réseau téléphonique numérique à multiplexage temporel comportant un circuit indicateur (OP) couplé par l'intermédiaire de diviseurs de tension (R8/R9; R10/R11) aux conducteurs (a,b) de la ligne de raccordement, pour une indication de fermeture de boucle dans la ligne de raccordement, caractérisé par le fait que le circuit indicateur (OP) peut être utilisé également pour une indication du potentiel de terre dans l'un des conducteurs de la ligne de raccordement au cours d'une signalisation correspondante et pour l'indication de l'abonné, qui déclenche une excitation, dans le cas de la présence d'une ligne commune d'abonné d'un branchement à deux abonnés, les résistances (R1 à R4; R5 à R7), situées dans le circuit d'alimentation de la ligne d'abonné et les résistances de division de tension (R8/R9; R10/R11; R12), étant à cet effet dimensionnées de manière que des tensions alternatives parasites introduites par couplage dans les conducteurs (a,b) de la ligne, se compensent aux entrées du circuit indicateur, tandis qu'en outre il est prévu des premiers moyens de commutation (A; a1, a2), grâce auxquels une résistance (R1) peut être insérée, lors de ladite indication du potentiel de terre et de l'indication de l'abonné, dans le conducteur (a) de la ligne, dans lequel s'effectue la mesure du potentiel de terre et qui est dimensionné de manière à fournir la sensibilité, accrue pour ces types d'indication, du circuit indicateur (OP), et à l'aide desquels en outre au moins un circuit de filtre (R8/C2; L1/C1) situé dans ce conducteur de la ligne est activé, et les effets desdites tensions alternatives parasites sur le circuit indicateur sont empêchés, et au moyen desquels l'autre conducteur (b) de la ligne de raccordement est déconnecté du circuit indicateur et est placé au potentiel de terre, et qu'enfin il est prévu des seconds moyens de commutation (OC), grâce auxquels, dans le cas de ladite indication de l'abonné, les deux conducteurs (a,b) de la ligne de raccordement sont shuntés avec une faible valeur ohmique dans le circuit de raccordement.

2. Montage suivant la revendication 1, caractérisé par des troisièmes moyens de commutation (B; b1, b2), grâce auxquels, dans le cas d'un courant élevé inadmissible déterminé dans la ligne de raccordement, des résistances (R3,R4;R6,R7) de limitation du courant sont insérées dans les conducteurs de la ligne de raccordement.